(19) Europäisches Patentamt
European Patent Office
Office européen des brevets

(11) Veröffentlichungsnummer: **0 051 239**
**B1**

(12) **EUROPÄISCHE PATENTSCHRIFT**

(45) Veröffentlichungstag der Patentschrift: **02.01.85**

(21) Anmeldenummer: **81108894.7**

(22) Anmeldetag: **24.10.81**

(51) Int. Cl.³: **C 08 G 18/02**, C 09 D 7/12, C 07 D 251/34, C 08 K 5/10, C 08 J 3/18, C 09 D 3/74

(54) **Lösungen von Isocyanato-Isocyanuraten in Weichmachern für Polyvinylchlorid, ein Verfahren zu ihrer Herstellung, sowie ihre Verwendung als haftverbessernde Zusatzmittel in Beschichtungsmitteln auf Basis von weichgemachtem Polyvinylchlorid.**

(30) Priorität: **05.11.80 DE 3041732**

(43) Veröffentlichungstag der Anmeldung: **12.05.82 Patentblatt 82/19**

(45) Bekanntmachung des Hinweises auf die Patenterteilung: **02.01.85 Patentblatt 85/1**

(84) Benannte Vertragsstaaten: **AT BE CH DE FR GB IT LI NL SE**

(56) Entgegenhaltungen:
**AT - B - 294 997**
**DE - A - 1 669 161**
**DE - A - 2 551 634**
**DE - A - 2 732 662**
**DE - A - 2 806 731**
**DE - B - 2 419 016**

**SOVIET INVENTIONS ILLUSTRATED, Sektion CH, Woche B 24, 25. Juli 1979, DERWENT PUBLICATIONS LTD, London, A 25**

(73) Patentinhaber: **BAYER AG, Konzernverwaltung RP Patentabteilung, D-5090 Leverkusen 1 Bayerwerk (DE)**

(72) Erfinder: **Breidenbach, Peter, Dr., Maarweg 33, D-5000 Köln 41 (DE)**
Erfinder: **Hurnik, Helmut, Bonner Strasse 5, D-5090 Leverkusen 3 (DE)**
Erfinder: **Pedain, Josef, Dr., Haferkamp 6, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 051 239 B1

BUNDESDRUCKEREI BERLIN

**Beschreibung**

Die vorliegende Erfindung betrifft neue Lösungen von Isocyanato-Isocyanuraten in Weichmachern für Polyvinylchlorid, ein Verfahren zur Herstellung dieser Lösungen durch Trimerisierung eines Teils der Isocyanatgruppen der den Isocyanato-Isocyanuraten zugrundeliegenden Diisocyanate in Gegenwart der Weichmacher als Lösungsmittel oder unter anschließender Lösung der Isocyanato-Isocyanurate in diesen Weichmachern, sowie die Verwendung der Lösungen als haftverbessernde Zusatzmittel für Beschichtungsmittel auf Basis von weichmacherhaltigem Polyvinylchlorid.

Bei der Beschichtung von organischen Substraten insbesondere solchen mit gegenüber Isocyanatgruppen reaktionsfähigen Gruppen mit Schmelzen aus Weich-PVC oder PVC-Plastisolen entspricht die Haftfestigkeit der Beschichtungen oft nicht den Anforderungen der Praxis. Zur Verbesserung der Haftung bedient man sich daher sogenannten Haftvermittler (siehe dazu Beschichten mit Kunststoffen, Carl Hanser Verlag, München, 1967 und Kunststoffe 68 (1978), S. 735 ff, S. 800 ff).

Für diesen Zweck gut geeignete Haftvermittler sind beispielsweise die in DE-B-2 419 016 beschriebenen Lösungen von Isocyanato-Isocyanuraten in Weichmachern für PVC.

Diese Haftvermittler des Standes der Technik befriedigen jedoch nicht alle Forderungen der Praxis in vollem Umfang. Insbesondere treten bei Verwendung der bekannten Haftvermittler unter den erforderlichen Verarbeitungstemperaturen für die PVC-Plastisole von 140—210°C oftmals unerwünschte Verfärbungen auf, die bei Haftvermittler-freien Produkten nicht beobachtet werden. Außerdem besteht ein Bedarf an Einkomponenten-Haftvermittlern, die die Herstellung von haftvermittelnde Zusätze enthaltenden PVC-Plastisolen mit einer erhöhten Topfzeit in Vergleich zu den die Haftvermittler des Standes der Technik enthaltenden Plastisolen gestattet.

Es war somit die Aufgabe der vorliegenden Erfindung, neue Haftvermittler für PVC-Plastisole zur Verfügung zu stellen, die die Herstellung von Haftvermittler enthaltenden PVC-Plastisolen gestatten, die sich durch eine erhöhte Topfzeit auszeichnen, und die darüber hinaus bei der Herstellung der Beschichtungen im Temperaturbereich von 140—210°C weitgehend farbstabil sind.

Diese Aufgabe konnte überraschenderweise mit den nachstehend näher beschriebenen erfindungsgemäßen Lösungen von Isocyanato-Isocyanuraten gelöst werden. Die erfindungsgemäß aufgefundene Lösung der gestellten Aufgabe ist überraschend, da weder ein Ersatz des gemäß DE-B-2 419 016 bevorzugten Toluylendiisocyanats durch das in Kolonne 2, Zeile 60, der genannten Vorveröffentlichung erwähnte 4,4'-Diisocyanatodiphenylmethan noch die in der Vorveröffentlichung ebenfalls empfohlene Trimerisierung von Gemischen aus Diisocyanaten und Monoisocyanaten zur Lösung des Problems eignen. Isocyanato-Isocyanurate auf Basis von 4,4'-Diisocyanatodiphenylmethan weisen in den gängigen Weichmachern für PVC nur eine beschränkte Löslichkeit auf und schneiden sich oft als Kristalle aus den Lösungen aus. Außerdem weisen die Lösungen von Isocyanato-Isocyanuraten auf Basis von 4,4'-Diisocyanatodiphenylmethan in den üblichen Verarbeitungskonzentrationen sehr hohe Viskositäten auf, so daß sie aus diesem Grund weitgehend ungeeignet sind. Die in DE-B-2 419 016 empfohlene Trimerisierung von Gemischen aus Mono- und Diisocyanaten führt zu Isocyanato-Isocyanuraten einer stark reduzierten NCO-Funktionalität, was sich in einer schlechteren Haftfestigkeit der Beschichtungen auswirkt.

Gegenstand der vorliegenden Erfindung sind Lösungen von Isocyanato-Isocyanuraten in Weichmachern für Polyvinylchlorid, gekennzeichnet durch einen Gehalt von 1 bis 50 Gew.-% an Verbindungen der idealisierten Formel

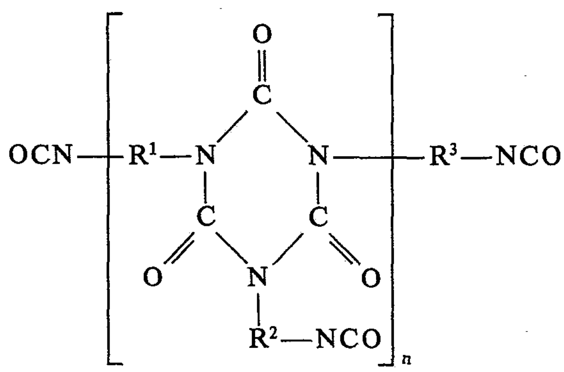

in welcher

$R^1$, $R^2$, $R^3$ für gleiche oder verschiedene Reste stehen und (i) zweiwertige aromatische Kohlenwasserstoffreste, wie sie durch Entfernung der Isocyanatgruppen aus 2,4-Diisocyanatotoluol oder dessen Gemischen mit bis zu 35 Gew.-%, bezogen auf Gesamtgemisch, an 2,6-Diisocyanatotoluol erhalten werden oder (ii) zweiwertige aromatische Kohlenwasserstoffreste, wie sie durch Entfernung der Isocyanatgruppen aus 4,4'-Diisocyanatodiphenylmethan und gegebenenfalls 2,4'- und/

oder 2,2'-Diisocyanatodiphenylmethan erhalten werden, bedeuten, mit der Maßgabe, daß mindestens 25 und höchstens 83 Mol-% der Reste der Definition (i) entsprechen, und

n für eine ganze oder (im statistischen Mittel) gebrochene Zahl von 1 bis 10 steht.

Gegenstand der vorliegenden Erfindung ist auch ein Verfahren zur Herstellung derartiger Lösungen, welches dadurch gekennzeichnet ist, daß man die Isocyanatgruppen binärer Gemische aus (i) 2,4-Diisocyanatotoluol oder dessen Gemischen mit bis zu 35 Gew.-%, bezogen auf Gesamtgemisch, an 2,6-Diisocyanatotoluol und (ii) 4,4'-Diisocyanatodiphenylmethan sowie gegebenenfalls 2,4'- und/oder 2,2'-Diisocyanatodiphenylmethan im Molverhältnis (i) : (ii) von 5 : 1 bis 1 : 3 in an sich bekannter Weise mit Hilfe von die Trimerisierung von Isocyanatgruppen beschleunigenden Katalysatoren teilweise trimerisiert, wobei man die Trimerisierungsreaktion entweder in Gegenwart von Weichmachern für Polyvinylchlorid als Lösungsmittel durchführt, oder wobei man das Umsetzungsprodukt, gegebenenfalls nach Abtrennung von überschüssigem nicht umgesetztem Ausgangsdiisocyanat in einem derartigen Weichmacher löst.

Gegenstand der vorliegenden Erfindung ist schließlich auch die Verwendung der erfindungsgemäßen Lösungen als haftverbessernde Zusatzmittel für Beschichtungsmittel auf Basis von weichmacherhaltigem Polyvinylchlorid.

Obige Formel für die in den erfindungsgemäßen Lösungen vorliegenden Verbindungen stellt lediglich eine »idealisierte« Formel dar, da davon ausgegangen werden muß, daß in den Lösungen neben Triisocyanato-monoisocyanuraten ($n=1$) und seinen linearen Homologen ($n>1$), welche an jedem Isocyanuratring mindestens einen Isocyanatoarylrest tragen, auch verzweigte NCO-substituierte Polyisocyanurate vorliegen, die Isocyanuratringe ohne Isocyanatoaryl-Substituent aufweisen.

Ausgangsmaterialien für das erfindungsgemäße Verfahren sind binäre Gemische aus (i) Diisocyanatotoluol-Isomeren und (ii) Diisocyanato-Diphenylmethan-Isomeren.

Bei den Diisocyanato-Toluol-Isomeren (i) handelt es sich um 2,4-Diisocyanatotoluol oder um dessen Gemische mit bis zu 35 Gew.-%, bezogen auf Gesamtgemisch an 2,6-Diisocyanatotoluol. Besonders bevorzugt kommen 2,4-Diisocyanatotoluol (TDI 100) und dessen Gemische mit 20 Gew.-% (TDI 80) bzw. 35 Gew.-% (TDI 65), jeweils bezogen auf Gesamtgemisch, an 2,6-Diisocyanatotoluol zum Einsatz. Bei den Diisocyanatodiphenylmethan-Isomeren (ii) handelt es sich um 4,4'-Diisocyanatodiphenylmethan sowie gegebenenfalls 2,4'- und/oder 2,2'-Diisocyanatodiphenylmethan. Vorzugsweise werden Gemische von 4,4'-Diisocyanatodiphenylmethan mit 2,4'-Diisocyanatodiphenylmethan im Gewichtsverhältnis 80 : 20 bis 20 : 80, welche Gemisch auch untergeordnete Mengen (0—5 Gew.-%, bezogen auf Gesamtgemisch) an 2,2'-Diisocyanatodiphenylmethan enthalten können, eingesetzt. Derartige Isomerengemische sind als Komponente (ii) gegenüber dem reinen 4,4'-Diisocyanatodiphenylmethan bevorzugt. Besonders bevorzugte Komponente (ii) ist ein Gemisch aus ca. 60 Gew.-% 2,4'- und ca. 40 Gew.-% 4,4'-Diisocyanatodiphenylmethan, welches noch untergeordnete Mengen (0—5 Gew.-%, bezogen auf Gesamtgemisch) an 2,2'-Diisocyanatodiphenylmethan enthalten kann. Die Art der in den erfindungsgemäßen Verfahrensprodukten der genannten allgemeinen Formel vorliegenden Reste $R^1$, $R^2$ und $R^3$ entspricht naturgemäß der Art der Ausgangsdiisocyanate.

In den beim erfindungsgemäßen Verfahren zum Einsatz gelangenden Gemischen werden die Komponenten (i) und (ii) in einem Molverhältnis von 5 : 1 bis 1 : 3, vorzugsweise 3 : 1 bis 1 : 3 eingesetzt.

Bei den als Lösungsmittel vorliegenden Weichmachern für Polyvinylchlorid handelt es sich um die üblichen für dieses Einsatzgebiet geeigneten Flüssigkeiten, insbesondere um unter Normaldruck einen Siedepunkt von mindestens 250° C aufweisende bzw. unter Normaldruck nicht destillierbare, bei Raumtemperatur vorzugsweise flüssige Ester auf Basis von

a) Alkansulfonsäuren mit 9 bis 20 Kohlenstoffatomen, Fettsäuren mit 12 bis 18 Kohlenstoffatomen, Alkandicarbonsäuren mit 6 bis 10 Kohlenstoffatomen, aromatischen Di- oder Polycarbonsäuren mit 8 bis 10 Kohlenstoffatomen, wobei bei der Addition der Kohlenstoffatome jeweils die Carboxylgruppen mit einbezogen werden, oder Phosphorsäure und
b) einwertigen aliphatischen Alkoholen mit 1 bis 13, vorzugsweise 4 bis 10 Kohlenstoffatomen mit linearer oder verzweigter Kohlenstoffkette, Phenolen mit 6 bis 20, vorzugsweise 6 oder 7 Kohlenstoffatomen und/oder araliphatischen Alkoholen mit 7 bis 20, vorzugsweise 7 bis 8 Kohlenstoffatomen wie z. B. Butyl-benzyl-phthalat, 2-Ethylhexyl-benzyl-phthalat, Tri-2-ethylhexyl-phosphat, 2-Ethylhexyl-diphenylphosphat, Iso-Decyl-diphenylphosphat, Trikresylphosphat, Krexyl-diphenylphosphat, Tris-(nonylphenyl)-phosphat, Di-(2-ethylhexyl)-adipat, Di-isodecyladipat, Di-(2-ethylhexyl)-acelat, Di-(2-ethylhexyl)-sebazat, Tri-(2-ethylhexyl)-trimellithat.

Die Durchführung des erfindungsgemäßen Verfahrens, d. h. die Trimerisierung eines Teils der Isocyanatgruppen der Ausgangsdiisocyanate erfolgt in an sich bekannter Weise unter Verwendung von an sich bekannten Trimerisierungskatalysatoren. Besonders vorteilhaft werden Mannich-Basen, wie sie durch Umsetzung von (substituierten) Phenolen mit Formaldehyd und Dialkylaminen entstehen, eingesetzt. Für das erfindungsgemäße Verfahren geeignete Mannichbasen sind beispielsweise in US-A-4 115 373, Kolonne 4, Zeile 54, bis Kolonne 7, Zeile 4, beschrieben. Neben diesen bevorzugt einzusetzenden Mannichbasen können beim erfindungsgemäßen Verfahren jedoch auch beliebige

andere, an sich bekannte Trimerisierungskatalysatoren für Isocyanatgruppen wie z. B. Phosphor-, Arsen- und Antimon-Basen, metallorganische Verbindungen, Metallsalze und Hydroxide, insbesondere basische Salze von Alkalimetallen, tert. Amine, sowie beliebige Kombinationen derartiger Katalysatoren eingesetzt werden.

Die Trimerisierungskatalysatoren, insbesondere die bevorzugten Mannichbasen, werden beim erfindungsgemäßen Verfahren in Mengen von 0,001 bis 5, vorzugsweise 0,01 bis 3 Gew.-%, bezogen auf Diisocyanat-Gemisch, eingesetzt.

Die Trimerisierung kann in Substanz oder in Gegenwart geeigneter inerter Lösungsmittel durchgeführt werden. Geeignete Lösungsmittel sind z. B. niedrigsiedende Ester wie Ethylacetat, Butylacetat, Ethylglykolacetat, chlorierte Kohlenwasserstoffe wie Methylenchlorid und insbesondere die vorstehend beispielhaft genannten Weichmacher für PVC. Bei Verwendung der beispielhaft genannten niedrigsiedenden Lösungsmittel werden diese im Anschluß an die Trimerisierungsreaktion, gegebenenfalls zusammen mit überschüssigem, nicht umgesetztem Diisocyanat vorzugsweise destillativ entfernt und die als Rückstand anfallende Verfahrensprodukte in den oben beispielhaft genannten Weichmachern für PVC gelöst. Auch bei der lösungsmittelfreien Durchführung des erfindungsgemäßen Verfahrens werden die Verfahrensprodukte, gegebenenfalls nach erfolgter Abtrennung von überschüssigem nicht umgesetztem Diisocyanat in den beispielhaft genannten Weichmachern gelöst. Bei beiden dieser denkbaren Ausführungsformen des erfindungsgemäßen Verfahrens erfolgt die Trimerisierungsreaktion im Temperaturbereich von 40 bis 140, vorzugsweise 60 bis 120°C, wobei die Trimerisierung durch thermische Zersetzung des Katalysators oder vorzugsweise durch Zugabe eines Katalysatorengifts vor dem jeweils gewünschten Trimerisierungsgrad abgebrochen wird.

Gemäß einer bevorzugten Ausführungsform des erfindungsgemäßen Verfahrens erfolgt die Trimerisierung unter Verwendung der oben beispielhaft genannten Weichmacher als Lösungsmittel, wobei das Ausgangsgemisch der Diisocyanate entweder in einer Konzentration, die der angestrebten Endkonzentration entspricht, oder in höherer Konzentration in dem Weichmacher gelöst wird, in welchem Falle vor, während oder nach dem Abstoppen der Trimerisierungsreaktion durch Zugabe weiteren Weichmachers die gewünschte Endkonzentration eingestellt wird. Auch gemäß dieser besonders bevorzugten Ausführungsform des erfindungsgemäßen Verfahrens erfolgt die Trimerisierungsreaktion innerhalb der obengenannten Temperaturbereiche, besonders vorteilhaft jedoch im Bereich zwischen 40 und 80°C. In der Praxis geht man dabei so vor, daß man die Lösung des Gemischs der Ausgangsdiisocyanate im Weichmacher bei Raumtemperatur oder bei der vorgesehenen Reaktionstemperatur mit dem Katalysator, gegebenenfalls portionsweise, versetzt und die Reaktionstemperatur durch die Geschwindigkeit der Katalysatorenzugabe oder durch externes Heizen bzw. Kühlen innerhalb der genannten Temperaturbereiche hält bis der NCO-Gehalt des Gemischs mindestens bis zur Hälfte des Anfangswerts abgesunken ist. Anschließend wird die Reaktion, vorzugsweise durch Zugabe eines Katalysatorengifts abgebrochen. Die Trimerisierung sollte hierbei jedoch auf jeden Fall so weit geführt werden, daß in den letztlich erhaltenen erfindungsgemäßen Lösungen der Gehalt an Diisocyanatotoluol unter 0,5, vorzugsweise unter 0,3 Gew.-% und der Gehalt an Diisocyanatodiphenylmethan unter 5, vorzugsweise unter 3 Gew.-% liegt.

Bei allen Ausführungsformen des erfindungsgemäßen Verfahrens wird die Trimerisierung vorzugsweise so weit geführt, daß 30gew.-%ige Lösungen der Trimerisate in den beispielhaft genannten Weichmachern für PVC einen NCO-Gehalt von 3 bis 7, vorzugsweise von 3 bis 6 Gew.-% aufweisen. Die Menge des Weichmachers wird bei allen Ausführungsformen des erfindungsgemäßen Verfahrens so bemessen, daß als Endprodukte des erfindungsgemäßen Verfahrens erfindungsgemäße Lösungen mit einem Feststoffgehalt von 1 bis 50, vorzugsweise 5 bis 35 Gew.-%, anfallen.

Für den Abbruch der Trimerisierungsreaktion geeignete Katalysatorengifte sind beispielsweise Säuren oder Säurederivate wie z. B. Perfluorbutansulfonsäure, Benzoesäure, Benzoylchlorid oder bei Verwendung von Mannichbasen als Katalysatoren vor allem Quaternierungsmittel wie z. B. p-Toluolsulfonsäuremethylester. Ein thermischer Abbruch der Trimerisierungsreaktion ist im Falle von Katalysatoren mit relativ geringer Zersetzungstemperatur, wie etwa den bevorzugt einzusetzenden Mannich-Basen möglich und erfolgt durch kurzzeitiges Erhitzen der Reaktionsgemische auf Temperaturen bis 130°C. Der Vorteil des thermischen Abstoppens besteht darin, daß die Verwendung chemischer Abstopper überflüssig bzw. die Mengen chemischer Abstopper gegenüber dem Stand der Technik vermindert werden, wodurch Trübungen in den Verfahrensprodukten verhindert werden.

Die erfindungsgemäßen Lösungen stellen klare Flüssigkeiten einer geringen Eigenfärbung dar, die auch bei mehrwöchiger Lagerung, selbst bei tiefen Temperaturen, weder zur Kristallisation noch zur Bildung von Trübungen oder Ausfällungen neigen. Außerdem zeichnen sie sich durch einen äußerst geringen Gehalt an freiem TDI aus, was wegen des relativ niedrigen Siedepunktes dieses Diisocyanats ein besonderer Vorteil der erfindungsgemäßen Lösungen ist. Die erfindungsgemäßen Lösungen eignen sich als Haftvermittler für Weich-PVC und insbesondere als haftvermittelnde Zusätze für PVC-Plastisole. Besonders vorteilhaft werden die erfindungsgemäßen Lösungen als Haftvermittler zwischen Substraten aus Chemiefasern mit gegenüber NCO-Gruppen reaktionsfähigen Gruppen wie z. B. Polyamid oder Polyesterfasern und PVC-Plastisolen bzw. Weich-PVC-Schmelzen verwendet. Selbstverständlich kann mit den erfindungsgemäßen Lösungen auch die Haftung von Weich-PVC bzw. PVC-Plastisolen an flächigen Substraten, d. h. Folien verbessert werden.

Bei der erfindungsgemäßen Verwendung der erfindungsgemäßen Lösungen kann beispielsweise so vorgegangen werden, daß die erfindungsgemäßen Lösungen auf die zu beschichtenden Substrate gedruckt, gerakelt, gerastert oder gesprüht oder durch Tauchen aufgebracht werden. Je nach herzustellendem Artikel werden auf die so vorbehandelten Substratoberflächen eine oder mehrere haftvermittlerfreie PVC-Schichten, z. B. als Plastisole oder durch Extrusions- oder Schmelzwalzenbeschichtung oder durch Laminierung aufgebracht. Selbstverständlich können die erfindungsgemäßen Lösungen auch einem PVC-Plastisol vor dessen Applikation zugesetzt werden.

Im letzteren Fall zeigt sich bei Verwendung der erfindungsgemäßen Produkte ein wesentlicher Vorteil gegenüber Produkten gemäß Stand der Technik: aus Gründen der Betriebssicherheit, bzw. eines ungestörten Betriebsablaufs wird für solche Systeme ein möglichst geringer Viskositätsanstieg der vollständigen PVC-Plastisol-Kompositionen gefordert. Bisher bekannte Systeme weisen bereits nach kurzer Zeit starke Viskositätsanstiege auf. Dagegen zeigen solche Kompositionen, die die erfindungsgemäßen Lösungen enthalten, erst nach vielen Stunden einen geringen Viskositätsanstieg. Die gewünschten Verarbeitungsreserven sind dadurch gegeben.

Die erfindungsgemäßen Lösungen werden normalerweise in solchen Mengen eingesetzt, daß, bezogen auf weichmacherfreies Polyvinylchlorid der Beschichtungsmasse 0,5 bis 200, vorzugsweise 2 bis 30 Gew.-% Isocyanato-Isocyanurat vorliegen. Die erfindungsgemäßen Lösungen können jedoch auch in beliebigen anderen, dem jeweiligen Anwendungsgebiet angepaßten Mengen eingesetzt werden.

Die Herstellung der fertigen Schichten, also die Reaktion der NCO-Gruppen des Haftvermittlers mit dem Substrat und die Gelierung der PVC-Schicht, erfolgt, unabhängig von der Art des Auftrags, nach der üblichen Weise bei höheren Temperaturen, wobei je nach Zusammensetzung der PVC-Schichten Temperaturen zwischen 130 und 210° C üblich sind.

Die Wärmestabilität der mit den erfindungsgemäßen Lösungen hergestellten Beschichtungen ist sehr gut, d. h. selbst bei längerer thermischer Belastung, wie sie unter den Herstellungsbedingungen der Schichten unvermeidbar ist, tritt nur allmählich eine geringe Verfärbung der Beschichtungen auf.

Die erfindungsgemäßen Lösungen eignen sich als haftverbessernde Zusatzmittel für Beschichtungen auf Basis von weichgemachtem PVC insbesondere zur Herstellung von Planen, Traglufthallen und andere textile Bauten, flexiblen Behältern, Zeltdächern, Markisen, Schutzkleidungen, Förderbändern, Flockteppichen oder Schaumkunstleder. Besonders gut geeignet sind die erfindungsgemäßen Lösungen als haftverbessernde Zusatzmittel bei der Beschichtung von Substraten mit gegenüber Isocyanatgruppen reaktionsfähigen Gruppen, insbesondere bei der Beschichtung von Substraten auf Basis von Chemiefasern mit gegenüber Isocyanatgruppen reaktionsfähigen Gruppen.

Die nachfolgenden Beispiele dienen zur weiteren Erläuterung der Erfindung. Alle Prozentangaben beziehen sich auf Gewichtsprozente. Es wurden folgende Abkürzungen verwendet:

| | | |
|---|---|---|
| TDI 100 | = | 2,4-Diisocyanatotoluol |
| TDI 80 | = | Gemisch aus 80% 2,4- und 20% 2,6-Diisocyanatotoluol |
| TDI 65 | = | Gemisch aus 65% 2,4- und 35% 2,6-Diisocyanatotoluol |
| 4,4'-MDI | = | Diphenylmethan-4,4'-diisocyanat |
| 2,4'-MDI | = | Diphenylmethan-2,4'-diisocyanat |
| MDI | = | Isomerengemisch aus ca. 60% 2,4'-MDI und ca. 40% 4,4'-MDI |
| DBP | = | Dibutylphthalat |
| DOP | = | Di-(2-ethylhexyl)-phthalat TOF = Tri-(2-ethylhexyl)-phosphat |

In den nachfolgenden Beispielen wurden folgende Katalysatoren verwendet:

Katalysator I:
Mannich-Base aus Phenol, Formaldehyd und Dimethylamin gemäß Beispiel 1 von US-PS 4 115 373.

Katalysator II:
Mannich-Base aus i-Nonyl-Phenol, Formaldehyd und Dimethylamin entsprechend Beispiel 2 von US-PS 4 115 373.

Beispiel 1

Eine Lösung von 40 g (0,16 Mol) MDI 60 und 139,2 g (0,8 Mol) TDI 100 in 418 g DOP wird bei 50° C vorgelegt. Nach Zugabe von 0,8 ml Katalysator II steigt die Temperatur langsam auf 58° C, um danach wieder zu fallen. Durch Heizen hält man dann den Ansatz auf 50° C. Nach insgesamt 85 Minuten beträgt der NCO-Gehalt der Lösung 8,3%. Man gibt erneut 0,1 ml Katalysator II zu und hält weitere 65 Minuten bei 50° C. Danach unterbricht man die Reaktion durch Zugabe eines Abstoppers (1 ml einer Lösung von 1 Teil Perfluorbutansulfonsäure in zwei Teilen Dimethylformamid) und erhält eine klare, farblose Lösung mit einem NCO-Gehalt von 6,0% und einer Viskosität von 3160 mPas (25° C), die über Monate unverändert bleibt. Der Gehalt an freiem MDI beträgt 2,7% (Summe der Isomeren), der Gehalt an freiem TDI 0,21%.

## Beispiel 2

100 g (0,4 Mol) MDI 60, 139,2 g (0,8 Mol) TDI 100 und 588 g DBP werden bei 50° C mit 1,1 ml Katalysator I versetzt, worauf die Temperatur kurzzeitig auf 60° C ansteigt. Man hält dann die Temperatur 5 h bei 50° C und unterbricht die Reaktion durch Zugabe von 1 ml einer Lösung von Perfluorbutansulfonsäure in 2 ml Dimethylformamid. Die erhaltene, praktisch farblose Lösung besitzt einen NCO-Gehalt von 5,4% und eine Viskosität von 600 mPas (25° C). Die Gehalte an freien Diisocyanaten betragen 1,9% (MDI) und 0,11% (TDI).

## Beispiel 3

130 g (0,52 Mol) MDI 60 und 45,2 g (0,26 Mol) TDI 100 werden bei 50° C mit 0,75 ml Katalysator I in 409 g DOP trimerisiert. Nach insgesamt 265 Minuten unterbricht man die Reaktion durch Zugabe von 1 ml Perfluorbutansulfonsäure-Lösung (1 : 2 in Dimethylformamid). Der NCO-Gehalt der schwachgelben, klaren Lösung beträgt 5,2%, die Viskosität 2200 mPas (25° C). Die Gehalte an Diisocyanaten betragen 2,6% (MDI) und $<$0,05% (TDI).

## Beispiel 4

130 g (0,52 Mol) MDI 60 und 45,2 g (0,26 Mol) TDI 100 werden in 409 g eines handelsüblichen Weichmachers, der im wesentlichen aus einem Gemisch von Alkansulfonsäure-Phenylestern mit 10 bis 18 Kohlenstoffatomen im Alkanrest besteht, mit 0,75 ml Katalysator II bei 50° C bis zu einem NCO-Gehalt des Gemisches von 5,4% trimerisiert (ca. 3 h). Danach gibt man 1 ml einer Lösung von 1 Teil Perfluorbutansulfonsäure in 2 Teilen Dimethylformamid zu und hält die Lösung noch 35 Minuten bei 80° C. Die schwachgelbe Lösung besitzt einen NCO-Gehalt von 5,2% und eine Viskosität von 2450 mPas (25° C).

## Beispiel 5

Der gleiche Versuch wie in Beispiel 4 wird mit Benzylbutyl-phthalat als Lösungsmittel wiederholt. Man erhält eine gelbe Lösung mit einem NCO-Gehalt von 5,3% und eine Viskosität von 1750 mPas (25° C).

## Beispiel 6

Die Wiederholung des Beispiels 4 mit TOF als Lösungsmittel ergibt eine schwachgelbe Lösung mit einem NCO-Gehalt von 5,4% und einer Viskosität von 190 mPas (25° C).

## Beispiel 7

125 g (0,72 Mol) TDI 80 und 60 g (0,24 Mol) MDI 60 werden in 432 g DOP gelöst und bei 50° C mit 1,2 ml Katalysator II versetzt. Nach einem kurzzeitigen Temperaturmaximum (60° C) hält man die Temperatur bei 50° C. Innerhalb von insgesamt 4 h gibt man noch weitere 2,4 ml Katalysator zu, gibt dann 10 g p-Toluolsulfonsäuremethylester zu und rührt 30 Minuten bei 80° C nach. Man erhält eine klare, praktisch farblose Lösung mit einem NCO-Gehalt von 5,0% und einer Viskosität von 13 100 mPas. Die Gehalte an Diisocyanaten betragen 1,1% (MDI) und 0,27% (TDI).

## Beispiel 8

450 g (2,6 Mol) TDI 80 und 324 g (1,3 Mol) MDI 60 werden in 1806 g DOP bei 80° C unter $N_2$-Atmosphäre vorgelegt und mit 9 ml Katalysator II versetzt. Nach kurzzeitigem Temperaturanstieg auf 85° C hält man die Temperatur bei 80° C. Nach insgesamt 3 h beträgt der NCO-Gehalt 5,6%. Nach erneuter Zugabe von 1 ml Katalysator und weiteren 80 Minuten bei 80° C erhitzt man auf 100° C und hält 1,5 h bei dieser Temperatur. Nach Abkühlen auf Raumtemperatur erhält man eine stabile, schwachgelbe Lösung mit einem NCO-Gehalt von 4,6%, einer Viskosität von 29 500 mPas und einem Gehalt an freien Diisocyanaten von 0,3% (MDI) bzw. 0,1% (TDI).

Beispiel 9

100 g (0,575 Mol) TDI 80 und 72 g (0,29 Mol) MDI 60 werden in 516 g DOP vorgelegt und bei 77° C mit 3,5 ml Katalysator II versetzt. Die Temperatur steigt auf 85° C an und wird danach bei 80° C gehalten. Nach insgesamt 255 Minuten wird der Ansatz für 1 h auf 100° C geheizt. Man läßt auf 80° C abkühlen, gibt 6,3 g p-Toluolsulfonsäuremethylester zu und hält noch 1 h bei 80° C. Die erhaltene klare, praktisch farblose Lösung hat einen NCO-Gehalt von 3,9%, eine Viskosität von 9700 mPas (25° C), einen MDI-Gehalt von 1,6% und einen TDI-Gehalt von 0,16%.

Beispiel 10

69,6 g (0,4 Mol) TDI 80 und 100 g (0,4 Mol) MDI 60 werden wie in Beispiel 9 beschrieben mit 3 ml Katalysator II in 396 g DOP trimerisiert und analog mit 5,4 g p-Toluolsulfonsäuremethylester behandelt. Die erhaltene Lösung hat einen NCO-Gehalt von 4,6% eine Viskosität von 25 300 mPas (25° C) und enthält 2,9% MDI und 0,2% TDI.

Beispiel 11

139,2 g (0,8 Mol) TDI 80 und 200 g (0,8 Mol) MDI 60 werden in 339 g DOP bei 80° C mit 5,5 ml Katalysator II versetzt. Die Temperatur steigt kurzzeitig auf 90° C an und wird dann bei 80° C gehalten. Nach insgesamt 1 h heizt man für 90 Minuten auf 100° C, verdünnt bei dieser Temperatur mit 678 g DOP von 23° C, versetzt bei 80° C mit 11 g p-Toluolsulfonsäuremethylester und rührt noch 1 h bei 80° C nach.

Die praktisch farblose Lösung hat einen NCO-Gehalt von 3,5%, eine Viskosität von 4650 mPas (25° C) und enthält 1,3% MDI und 0,12 TDI.

Beispiel 12

150 g (0,86 Mol) TDI 65 und 108 g (0,43 Mol) MDI 60 werden in 602 g DOP bei 50° C mit insgesamt 3,6 ml Katalysator I bis zu einem NCO-Gehalt von 4,9% trimerisiert. Nach Zugabe von 9 g p-Toluolsulfonsäuremethylester rührt man 30 Minuten bei 80° C nach. Die Lösung enthält 4,8% NCO, 2,6% MDI, 0,26% TDI und hat eine Viskosität von 17 700 mPas (25° C).

Beispiel 13

100 g (0,57 Mol) TDI 100 und 72 g (0,29 Mol) 4,4'-MDI werden in 401 g DBP bei 50° C mit 0,75 ml Katalysator II 45 Minuten trimerisiert und die Reaktion dann durch Zugabe von 1 ml einer Lösung aus 1 Teil Perfluorbutansulfonsäure und 2 Teilen Dimethylformamid unterbrochen. Die erhaltene, farblose Lösung hat einen NCO-Gehalt von 6,4%, eine Viskosität von 260 mPas (25° C) und bleibt über Monate niedrigviskos ohne Ausfällungen oder Trübungen zu zeigen.

Beispiel 14

139,5 g (0,8 Mol) TDI 80 und 50 g (0,2 Mol) 4,4'-MDI werden in 441 g DOP bei 50—55° C mit insgesamt 1,8 ml Katalysator II trimerisiert. Nach 3 Stunden versetzt man das Gemisch mit 5 g p-Toluolsulfonsäuremethylester und rührt 30 Minuten bei 80° C nach. Man erhält eine farblose, klare Lösung mit 5,5% NCO, 1,2% MDI und 0,2% TDI und einer Viskosität von 3700 mPas, die sich bei Lagerung nicht verändert.

Beispiel 15 (Vergleich)

330 g (1,32 Mol) MDI 60 werden bei 50° C in 770 g DBP mit 1,6 ml Katalysator II trimerisiert. Nach 315 Minuten gibt man 6,5 g p-Toluolsulfonsäuremethylester zu und rührt 30 Minuten bei 80° C nach. Die gelbe Lösung hat einen NCO-Gehalt von 3,7%. Die Viskosität beträgt 3800 mPas (25° C) und ist damit deutlich höher als die die bezüglich des Weichmachers entsprechenden erfindungsgemäßen Produkte (Beispiel 2, 13).

Beispiel 16 (Vergleich)

150 g (0,6 Mol) 4,4'-MDI werden in 350 g DOP bei 50° C mit 0,7 ml Katalysator II trimerisiert. Nach 165 Minuten unterbricht man die Reaktion durch Zugabe von 1 ml einer Lösung aus 1 Teil Perfluorbutansulfonsäure und 2 Teilen Dimethylformamid. Bereits beim Abkühlen der Lösung, die einen NCO-Gehalt von 4,8% besitzt, tritt starke Trübung auf.

Beispiel 17 (Vergleich)

130 g (0,75 Mol) TDI 65 werden bei 50° C in 390 g DOP mit insgesamt 2,2 ml Katalysator II trimerisiert. Nach insgesamt 370 Minuten unterbricht man die Reaktion durch Zugabe von 1 ml einer Lösung von 1 ml Perfluorbutansulfonsäure in 2 ml Dimethylformamid. Man erhält eine klare Lösung mit einem NCO-Gehalt von 3,8% und einer Viskosität von 9020 mPas (25° C).

Beispiel 18

Dieses Beispiel zeigt die technischen Vorteile, die bei der Verarbeitung einer erfindungsgemäßen Lösung im Vergleich zu der Lösung gemäß Beispiel 17 ermöglicht werden.

a) Herstellung des PVC-Plastisols

1000 g PVC, Pastentyp, K-Wert = 74 nach DIN 53 726 werden mit 700 g DOP und 24 g Barium-Cadmium-Laurat (als 50%ige Paste in DOP) zweimal homogen über einen Dreiwalzenstuhl abgerieben. Das so erhaltene PVC-Plastisol wird dann 24 Stunden bei 20°C gealtert, bis es für die nachfolgenden Untersuchungen zum Einsatz gelangt.

b) Viskosität bei 20° C in Abhängigkeit von der Lagerungszeit (»pot-life«)

800 g des vorstehend beschriebenen PVC-Plastisols werden mit 40 g der 25%igen Trimerisatlösung gemäß Beispiel 17 versetzt und homogen verrührt.

In einem zweiten Ansatz werden 800 g des PVC-Plastisols mit 40 g der erfindungsgemäßen 25%igen Lösung in DOP gemäß Beispiel 11 versetzt und ebenfalls homogen verrührt.

Von beiden PVC-Plastisolen wird das Viskositätsverhalten bei 20° C in Abhängigkeit von der Lagerungszeit mit einem Rotationsviskosimeter der Firma Haake/Berlin, mit Meßkörper MV III, bei einer Schergeschwindigkeit (D) von 8,0 $S^{-1}$ gemessen. Die erhaltenen Werte sind der nachfolgenden Tabelle 1 zu entnehmen, in der sowohl die gemessenen Viskositäten, als auch die Differenzen zu der Anfangsviskosität (in mPas und in %, bezogen auf Ausgangsviskosität) in Abhängigkeit von der Zeit angesehen werden.

Tabelle 1

Viskositätsverhalten bei 20° C in Abhängigkeit von der Lagerungszeit (»pot-life«)

| PVC-Plastisol | Ausgangsviskosität | nach 7 Stunden | | | nach 24 Stunden | | | nach 30 Stunden | | |
|---|---|---|---|---|---|---|---|---|---|---|
| | | | Viskositätsanstieg | | | Viskositätsanstieg | | | Viskositätsanstieg | |
| | mPas | mPas | mPas | % | mPas | mPas | % | mPas | mPas | % |
| Vergleich | 22 675 | 26 609 | 3 934 | 17,3 | 38 480 | 15 805 | 69,7 | 42 814 | 20 139 | 88,8 |
| Erfindungsgemäß | 14 872 | 15 272 | 400 | 2,7 | 19 806 | 4 934 | 33,1 | 22 541 | 7 669 | 51,6 |

Beispiel 19

Dieses Beispiel zeigt die gute Haftfestigkeit von mit erfindungsgemäßen Lösungen hergestellten PVC-Beschichtungen.

Es wird ein PVC-Plastisol hergestellt aus

300 g PVC, Pastentyp, (K-Wert 70, nach DIN 53 726)
300 g PVC, Pastentyp, (K-Wert 80, nach DIN 53 726)
400 g $C_{10}-C_{18}$-Alkansulfonsäurephenylester
60 g Kaolin
20 g dibas, Bleiphosphit
10 g Chromoxidgrün

Durch zweimaliges Abreiben über einen Dreiwalzenstuhl erhält man ein homogenes PVC-Plastisol, das anschließend 24 Stunden bei 20° C gealtert wird.

Auf 100 g dieses so hergestellten PVC-Plastisols werden jeweils 5 g der einzelnen Lösungen der Isocyanato-isocyanurate zugesetzt und homogen verrührt. Diese einzelnen Mischungen werden nun mit 100 g/m² auf Testgewebe aus Polyester (1100 dtex, Bindung L 1/1, Einstellung 9/9 Fd/cm) und Polyamid-6,6 (940 dtex, Bindung L 1/1, Einstellung 8,5/9,5 Fd/cm) mit einem Rakelmesser aufgetragen und bei 140° C für eine Minute in einem mit Heißluft beheizten Umlufttrockenschrank geliert. Auf diesen Grundstrich wird nun ein Deckstrich aus dem PVC-Plastisol ohne Isocyanato-isocyanurat, ebenfalls mit einem Rakelmesser, aufgestrichen und der Verbund bei 180° C in einem Umlufttrockenschrank ausgeliert.

Die Haftfestigkeit wird dann an 5 cm breiten Probekörpern, die aus der Beschichtung ausgestanzt werden, gemessen (DIN 53 357). Die einzelnen Haftfestigkeiten sind in Tabelle 2 zusammengestellt.

Es ist deutlich ersichtlich, daß mit allen erfindungsgemäßen Lösungen sowohl auf Polyester- als auch auf Polyamid-6,6 erheblich verbesserte Haftfestigkeiten erreicht werden als bei dem Vergleichsbeispiel ohne Zusatz.

Tabelle 2

| Zusätze zu 100 g PVC-Plastisol aus Beispiel 3 | Haftfestigkeiten (N/5 cm) auf Polyester 1100 dtex | Polyamid-6,6 940 dtex |
|---|---|---|
| Ohne Zusatz | 45 | 35 |
| +5 g Produkt nach Beispiel 17 | 180 | 205 |
| +3 g Produkt aus Beispiel 3 | 150 | 195 |
| +4 g Produkt aus Beispiel 3 | 170 | 205 |
| +5 g Produkt aus Beispiel 3 | 175 | 200 |
| +3 g Produkt aus Beispiel 4 | 150 | 190 |
| +4 g Produkt aus Beispiel 4 | 155 | 195 |
| +5 g Produkt aus Beispiel 4 | 165 | 200 |
| +3 g Produkt aus Beispiel 11 | 170 | 200 |
| +4 g Produkt aus Beispiel 11 | 190 | 210 |
| +5 g Produkt aus Beispiel 11 | 200 | 225 |
| +5 g Produkt aus Beispiel 10 | 175 | 225 |
| +5 g Produkt aus Beispiel 8 | 190 | 210 |
| +5 g Produkt aus Beispiel 9 | 200 | 205 |

Beispiel 20

Dieses Beispiel zeigt, in welch unerwartetem Maß die Thermostabilität durch Verwendung von erfindungsgemäßen Produkten gegenüber dem Stand der Technik verbessert wird.

555 g PVC, Pastentyp, K-Wert = 74 nach DIN 53 726
397 g DOP
16 g epoxidiertes Sojabohnenöl
16 g Barium-Cadmium-Zink-Stabilisator, fl.
16 g Titandioxid

Die Rezepturkomponenten werden zweimal homogen über einen Dreiwalzenstuhl abgerieben und 24 Stunden bei 20° C gealtert.

Für die Probenvorbereitung werden jeweils 100 g des vorstehend beschriebenen PVC-Plastisols mit 5 g der einzelnen Lösungen versetzt und homogen verrührt.

Von diesen einzelnen Mischungen werden nun auf siliconisiertem Trägerpapier 0,5 mm dicke Folien gestrichen, die drei Minuten in einem mit Heißluft von 170° C beheizten Umlufttrockenschrank geliert werden. Nach dem Abkühlen werden die Folien vom Trägerpaar getrennt. Die Prüfung der Thermostabilität der Folien erfolgt im Mathis-Thermotester (Fa. Mathis AG/Zürich) bei 180° C. Im Zeitabstand von 10 Minuten werden dabei automatisch Proben ausgefahren. Die thermische Belastung ist an der Verfärbung erkennbar. Die Zeit die bis unmittelbar vor der Braunverfärbung verstreicht, ist ein Maß für die Thermostabilität.

Tabelle 3 enthält einen Vergleich der Thermostabilitäten bei Einsatz der verschiedenen Lösungen.

Tabelle 3

| Zusatz zu 100 g PVC-Plastisol | Thermostabilität ( x ) in Minuten, gemessen im Mathis-Thermotester bei 180° C |
|---|---|
| Ohne Zusatz (Thermostabilität des PVC-Plastisols) | 40' < ( x ) < 50' |
| +5 g Lösung aus Beispiel 17 | 10' < ( x ) ≤ 20' |
| +5 g Lösung aus Beispiel 4 | 40' < ( x ) < 50' |
| +5 g Lösung aus Beispiel 3 | 40' < ( x ) < 50' |
| +5 g Lösung aus Beispiel 11 | 30' < ( x ) < 40' |
| +6 g Lösung aus Beispiel 11 | 30' < ( x ) < 40' |

**Patentansprüche**

1. Lösungen von Isocyanato-Isocyanuraten in Weichmachern für Polyvinylchlorid, gekennzeichnet durch einen Gehalt von 1 bis 50 Gew.-% an Verbindungen der idealisierten Formel

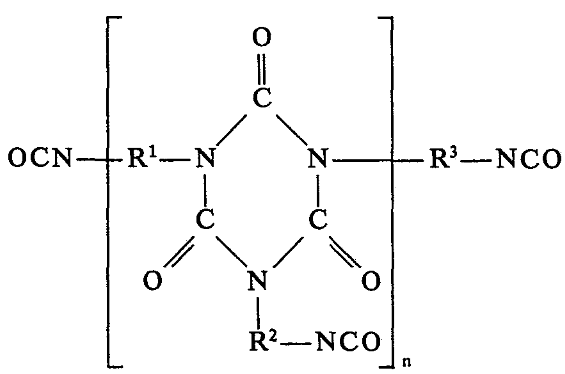

in welcher

$R^1$, $R^2$ und $R^3$ für gleiche oder verschiedene Reste stehen und (i) zweiwertige aromatische Kohlenwasserstoffreste, wie sie durch Entfernung von Isocyanatgruppen aus 2,4-Diisocyanatotoluol oder dessen Gemischen mit bis zu 35 Gew.-%, bezogen auf Gesamtgemisch, an 2,6-Diisocyanatotoluol erhalten werden oder (ii) zweiwertige aromatische Kohlenwasserstoffreste, wie sie durch Entfernung der Isocyanatgruppen aus 4,4'-Diisocyanatodiphenylmethan und gegebenenfalls 2,4'- und/oder 2,2'-Diisocyanatodiphenylmethan erhalten werden, bedeuten, mit der Maßgabe, daß mindestens 25 und höchstens 83 Mol-% der Reste der Definition (i) entsprechen, und

n für eine ganze oder (im statistischen Mittel) gebrochene Zahl von 1 bis 10 steht.

2. Lösungen gemäß Anspruch 1, dadurch gekennzeichnet, daß sich die Reste (i) zu 0 bis 35 Mol-% aus durch Entfernung der Isocyanatgruppen aus 2,6-Diisocyanatotoluol erhaltenen Resten und zu 100 bis 65 Mol-% aus durch Entfernung der Isocyanatgruppen aus 2,4-Diisocyanatotoluol erhaltenen Resten und die Reste (ii) zu 20 bis 80 Mol-% aus durch Entfernung der Isocyanatgruppen aus 2,4'-Diisocyanatodiphenylmethan erhaltenen Resten und zu 80 bis 20 Mol-% aus durch Entfernung der Isocyanatgruppen aus 4,4'-Diisocyanatodiphenylmethan sowie zu 0 bis 5 Mol-% aus durch Entfernung der Isocyanatgruppen aus 2,2'-Diisocyanatodiphenylmethan erhaltenen Resten zusammensetzen.

3. Verfahren zur Herstellung von Lösungen gemäß Anspruch 1, dadurch gekennzeichnet, daß man die Isocyanatgruppen binärer Gemische aus (i) 2,4-Diisocyanatotoluol oder dessen Gemischen mit bis zu 35 Gew.-%, bezogen auf Gesamtgemisch, an 2,6-Diisocyanatotoluol und (ii) 4,4'-Diisocyanatodiphenylmethan sowie gegebenenfalls 2,4'- und/oder 2,2'-Diisocyanatodiphenylmethan im Molverhältnis (i) : (ii) von 5 : 1 bis 1 : 3 in an sich bekannter Weise mit Hilfe von die Trimerisierung von Isocyanatgruppen beschleunigenden Katalysatoren teilweise trimerisiert, wobei man die Trimerisierungsreaktion entweder in Gegenwart von Weichmachern für Polyvinylchlorid als Lösungsmittel durchführt oder wobei man das Umsetzungsprodukt, gegebenenfalls nach Abtrennung von überschüssigem, nicht umgesetztem Ausgangsdiisocyanat in einem derartigen Weichmacher löst.

4. Verfahren gemäß Anspruch 3, dadurch gekennzeichnet, daß man als binäre Gemische solche verwendet, deren Komponente (i) aus 2,4- und 2,6-Diisocyanatotoluol im Molverhältnis 100 : 0 bis 65 : 35 und deren Komponente (ii) aus 4,4'- und 2,4'-Diisocyanatodiphenylmethan im Molverhältnis 80 : 20 bis 20 : 80 sowie gegebenenfalls untergeordneten Mengen an 2,2'-Diisocyanatodiphenylmethan bestehen.

5. Verwendung der Lösungen gemäß Anspruch 1 und 2 als haftverbessernde Zusatzmittel in Beschichtungsmitteln auf Basis von weichmacherhaltigem Polyvinylchlorid.

**Claims**

1. Solutions of isocyanato-isocyanurates in plasticisers for polyvinyl chloride, characterised by a content of 1 to 50% by weight of compounds of the idealised formula

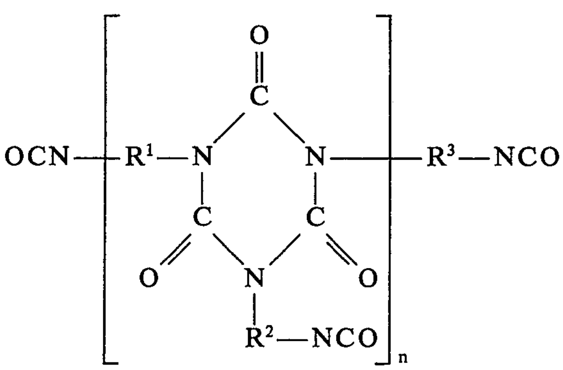

in which

$R^1$, $R^2$and $R^3$ represent identical or different radicals and denote (i) difunctional aromatic hydrocarbon radicals of the type obtained by removing the isocyanate groups from 2,4-diisocyanato-toluene or mixtures thereof with up to 35% by weight, based on the total mixture, of 2,6-diisocyanatotoluene or (ii) difunctional aromatic hydrocarbon radicals of the type obtained by removing the isocyanate

groups from 4,4'-diisocyanato-diphenyl methane and, optionally, 2,4'- and/or 2,2'-diisocyanato-diphenyl methane, with the proviso that at least 25 and at most 83 mol % of the radicals correspond to definition (i), and

n represents an integer or a fraction (as a statistical average) of 1 to 10.

2. Solutions according to Claim 1, characterised in that 0 to 35 mol % of the radicals (i) consist of radicals obtained by removing the isocyanate groups from 2,6-diisocyanato-toluene and 100 to 65 mol % consist of radicals obtained by removing the isocyanate groups from 2,4-diisocyanato-toluene and 20 to 80 mol % of the radicals (ii) consist of radicals obtained by removing the isocyanate groups from 2,4'-diisocyanato-diphenyl methane and 80 to 20 mol % consist of radicals obtained by removing the isocyanate groups from 4,4'-diisocyanato-diphenyl methane and 0 to 5 mol % consist of radicals obtained by removing the isocyanate groups from 2,2'-diisocyanato-diphenyl methane.

3. Process for producing the solutions according to Claim 1, characterised in that the isocyanate groups of binary mixtures of (i) 2,4-diisocyanato-toluene or mixtures thereof with up to 35% by weight, based on the total mixture, of 2,6-diisocyanato-toluene and (ii) 4,4'-diisocyanato-diphenyl methane and, optionally, 2,4'- and/or 2,2'-diisocyanato-diphenyl methane in a molar ratio of (i) : (ii) of 5 : 1 to 1 : 3 are partly trimerised in a manner known per se with the aid of catalysts which accelerate the trimerisation of isocyanate groups, the trimerisation reaction either being carried out in the presence of plasticisers for polyvinyl chloride as solvents, or the reaction product being dissolved in a plasticiser of this type, optionally after separating off excess, unreacted starting diisocyanate.

4. Process according to Claim 3, characterised in that the binary mixtures used are those of which component (i) consists of 2,4- and 2,6-diisocyanato-toluene in a molar ratio of 100 : 0 to 65 : 35 and of which component (ii) consists of 4,4'- and 2,4'-diisocyanato-diphenyl methane in a molar ratio of 80 : 20 to 20 : 80, and, optionally, minor quantities of 2,2'-diisocyanato-diphenyl methane.

5. Use of the solutions according to Claim 1 and 2 as adhesion-improving additives in coating compositions based on polyvinyl chloride containing plasticisers.

**Revendications**

1. Solutions d'isocyanato-isocyanurates dans des plastifiants pour chlorure de polyvinyle, caractérisées par une teneur de 1 à 50% en poids en composés de formule idéalisée:

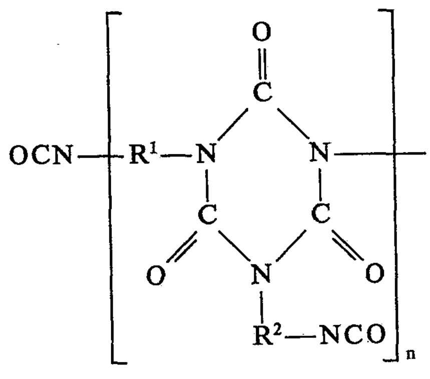

dans laquelle

$R^1$, $R^2$ et $R^3$ représentent des radicaux identiques ou différents, qui sont (i) des radicaux hydrocarbonés aromatiques bivalents comme ceux qui sont obtenus en éliminant les groupes isocyanate à partir du 2,4-diisocyanato-toluène ou de ses mélanges avec jusqu'à 35% en poids, par rapport au mélange total, de 2,6-diisocyanato-toluène, ou (ii) des radicaux hydrocarbonés aromatiques bivalents comme ceux qui sont obtenus par élimination des groupes isocyanate à partir du 4,4'-diisocyanatodiphénylméthane et éventuellement du 2,4'- et/ou 2,2'-diisocyanatodiphénylméthane, avec comme mesure qu'au moins 25 et au plus 83 moles % correspondent aux radicaux de définition (i) et

n représente un nombre entier ou fractionnaire (en moyenne statistique) de 1 à 10.

2. Solutions selon la revendication 1, caractérisées en ce que les radicaux (i) se composent de 0 à 35 moles % de radicaux obtenus par élimination des groupes isocyanate à partir du 2,6-diisocyanato-toluène et de 100 à 65 moles % de radicaux obtenus par élimination des groupes isocyanate à partir du 2,4-diisocyanato-toluène, et en ce que les radicaux (ii) se composent de 20 à 80 moles % de radicaux obtenus par élimination des groupes isocyanate à partir du 2,4'-diisocyanatodiphénylméthane et de 80 à 20 moles % de radicaux obtenus par élimination des groupes isocyanate à partir du 4,4'-diisocyana-

todiphénylmethane, de même que de 0 à 5 moles % de radicaux obtenus par élimination des groupes isocyanate à partir du 2,2′-diisocyanatodiphénylméthane.

3. Procédé de fabrication de solutions selon la revendication 1, caractérisé en ce que les groupes isocyanate de mélanges binaires (i) de 2,4-diisocyanato-toluène ou de ses mélanges avec jusqu'à 35% en poids, par rapport au mélange total, de 2,6-diisocyanato-toluène et (ii) de 4,4′-diisocyanatodiphénylméthane de même qu'éventuellement de 2,4′- et/ou 2,2′-diisocyanatodiphénylméthane dans le rapport molaire (i) : (ii) de 5 : 1 à 1 : 3, sont trimérisés partiellement de manière connue en elle-même à l'aide de catalyseurs accélérant la trimérisation des groupes isocyanate, en exécutant la réaction de trimérisation soit en présence de plastifiants pour chlorure de polyvinyle comme solvants, soit en dissolvant le produit de réaction, éventuellement après séparation de l'excès de diisocyanate de départ n'ayant pas réagi, dans un plastifiant de ce genre.

4. Procédé selon la revendication 3, caractérisé en ce qu'en tant que mélanges binaires on utilise ceux dont leur composant (i) consiste en du 2,4- et 2,6-diisocyanato-toluène dans le rapport molaire de 100 : 0 à 65 : 35, et dont leur composant (ii) consiste en 4,4′- et 2,4′-diisocyanatodiphénylméthane dans le rapport molaire de 80 : 20 à 20 : 80, de même qu'éventuellement en des quantités mineures de 2,2′-diisocyanatodiphénylméthane.

5. Utilisation des solutions selon les revendications 1 et 2 comme additifs améliorant l'adhérence dans des agents de revêtement à base de chlorure de polyvinyle contenant du plastifiant.